# DEMANDE DE BREVET EUROPEEN

(11) **EP 1 300 979 A1**
(43) Date de publication de la demande: **09.04.2003**
(21) Numéro de dépôt: 01440333.1
(22) Date de dépôt: 04.10.2001
(51) Int. Cl.: H04L 9/32

(54) **Procédé de dépôt d'un document numérique et de restitution d'au moins une copie conforme de ce document**

(71) Demandeur: Technosphere Sarl, 1705 Fribourg (CH)
(72) Inventeur: Baumann, Jean-Claude, 1032 Romanel (CH)
(74) Mandataire: Nithardt, Roland

(57) **Abrégé**

L'invention concerne un procédé de dépôt d'un document numérique à conserver et de restitution d'au moins une copie conforme de ce document d'une manière totalement sécurisée, avec une garantie d'authenticité irréfutable.

Ce procédé de dépôt est caractérisé en ce que, pour le dépôt du document sous forme numérique, le propriétaire de ce document ou un ayant droit de ce propriétaire appose au cours d'une première étape au moins une signature numérique sur le document, on procède au cours d'une deuxième étape à une transmission du document signé vers un site affecté au dépôt, on procède au cours d'une troisième étape à une authentification du document et du propriétaire ou de son ayant droit, et on procède au cours d'une quatrième étape à une signature numérique d'authentification apposée sur le document par un tiers archiveur responsable du site affecté au dépôt.

## Description

La présente invention concerne un procédé de dépôt d'un document numérique à conserver et de restitution d'au moins une copie conforme de ce document.

Actuellement tous les documents qui doivent être obligatoirement déposés, en raison de dispositions légales, auprès d'instances officielles le sont sous la forme de copies sur un support en papier. Ces documents peuvent concerner les particuliers ou les sociétés. Il s'agit par exemple des pièces échangées entre un particulier, les services médicaux ou pharmaceutiques dans le cadre d'une consultation médicale ou d'une intervention, les caisses d'assurance maladie ou d'autres services impliqués. Après traitement du cas, ces documents sont destinés à un archivage. Cet archivage est couramment appelé « l'archivage papier » qui présente les inconvénients bien connus de l'encombrement, du risque de destruction par incendie, etc.

Un moyen de palier les inconvénients mentionnés ci-dessus de l'archivage papier consiste à utiliser l'archivage de documents originaux appelé « archivage électronique » qui présente les avantages bien connus de l'encombrement réduit, de la possibilité de reproduction des documents archivés et du stockage sécurisé en plusieurs exemplaires en des endroits éloignés les uns des autres. Cette sécurisation s'effectue de façon connue par des moyens techniques appropriés pour assurer la confidentialité des documents, par exemple par des moyens de cryptage.

L'un des problèmes que l'on rencontre et qui a constitué jusqu'à ce jour un frein au développement de l'archivage électronique est celui du caractère original, officiel ou certifié de ces documents. En effet, autant il est facile de produire un document original sur un support en papier en cas de litige, autant il est difficile de démontrer le caractère certifié d'un document numérique. Un document peut être considéré comme certifié si on peut apporter la preuve qu'il est identique à un original qui avait lui-même été validé c'est-à-dire si on peut garantir qu'il n'a subi aucune transformation pendant son archivage.

Le procédé selon l'invention a pour but d'apporter cette garantie et d'offrir des moyens pour assurer le dépôt et la restitution d'un document numérisé ou plus exactement d'une copie conforme de ce document, d'une manière sécurisée.

L'archivage dit électronique est notamment visé par la loi française du 13 mars 2000, basée sur une directive européenne, qui porte sur l'adaptation du droit à la preuve aux techniques de l'information et est relative à la signature électronique. En outre, il existe des règles, des normes et des recommandations telles que « le guide de l'archivage électronique sécurisé » et la norme « NFZ 42-013 concernant les recommandations à la conception et à l'exploitation des systèmes d'archivage numérique » qui visent l'archivage électronique et son utilisation dans le cadre des législations existantes et son application dans un environnement économique.

Le but visé par l'invention est atteint par le procédé spécifié en préambule et caractérisé en ce que, pour le dépôt du document sous forme numérique, le propriétaire de ce document ou un ayant droit de ce propriétaire appose au cours d'une première étape au moins une signature numérique sur le document, on procède au cours d'une deuxième étape à une transmission du document signé vers un site affecté au dépôt, on procède au cours d'une troisième étape à une authentification du document et du propriétaire ou de son ayant droit, et on procède au cours d'une quatrième étape à une signature numérique d'authentification apposée sur le document par un tiers archiveur responsable du site affecté au dépôt et en ce que, pour la restitution du document numérique suite à une demande, le tiers archiveur procède à une validation de la demande en vérifiant la qualité d'ayant droit à l'accès au document, puis procède à la certification du document en apposant sa signature numérique pour attester que le document restitué est conforme au document déposé et effectue enfin la restitution d'une copie du document.

Selon un mode de mise en oeuvre préféré, au cours de la deuxième étape, le propriétaire du document numérique ou son ayant droit accède audit site affecté au dépôt et procède à son authentification en fournissant des informations de validation comportant au moins un code d'accès et un mot de passe.

De façon avantageuse, le site de dépôt comporte un espace réservé correspondant à des « documents à valider » du tiers archiveur responsable des dossiers concernés.

De préférence, après le dépôt du document on procède à une conversion au format approprié et à une extraction de texte pour réaliser une version numérique à un format donné.

Le cas échéant, il peut extraire le texte pour obtenir un texte dit « texte extrait » agencé pour alimenter une base de données existante.

D'une manière particulièrement avantageuse, le tiers archiveur qui souhaite accéder à son espace réservé doit entrer le chemin de sa clé privée, le mot de passe associé et le chemin du certificat de clé publique lors d'une phase d'authentification permettant l'accès.

Pour restituer le document numérique suite à une demande, le tiers archiveur procède de préférence tout d'abord à une validation de la demande en vérifiant la qualité d'ayant droit à l'accès au document.

Selon un mode de mise en oeuvre préférentiel, au moment de la restitution d'une copie conforme du document archivé, le tiers archiveur convertit ce document en un format supporté par un outil de visualisation du demandeur. De cette manière le demandeur, qu'il soit le propriétaire d'origine du document, un ayant droit ou un tiers qui est habilité à consulter le document, peut accéder au contenu du document même si l'informatique a évolué et si les logiciels d'origine ne sont plus applicables.

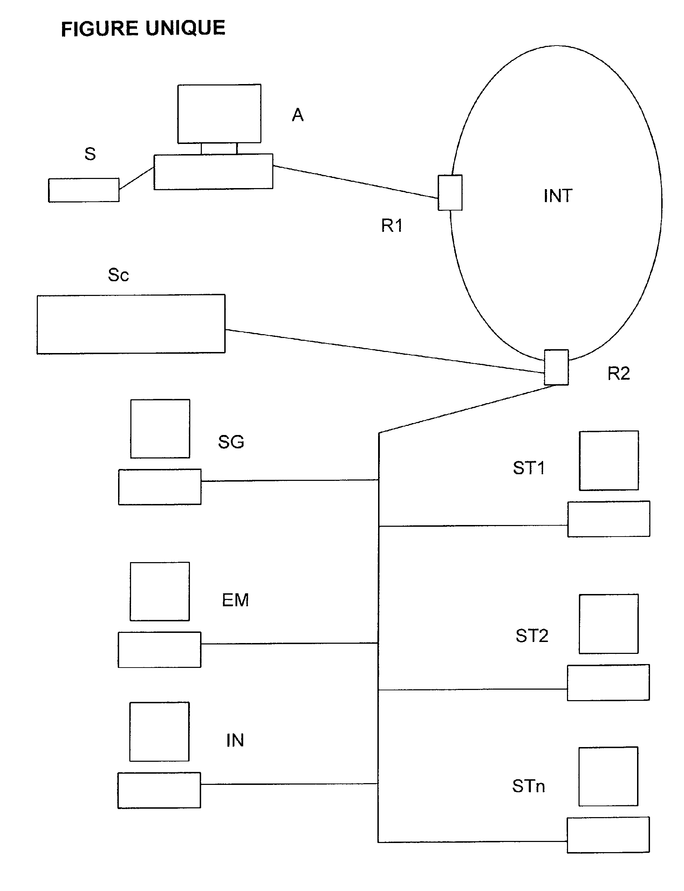

La présente invention et ses avantages seront mieux compris à la lecture de la description détaillée d'une mise en oeuvre préférée du procédé de l'invention et en référence au dessin annexé, dont la figure unique illustre schématiquement les équipements requis pour la mise en oeuvre du procédé.

A titre d'exemple, on exposera le cas de documents considérés comme des pièces authentiques et qui sont destinés à être archivés pour pouvoir être accessibles en cas de litige ou pour des raisons statistiques, comptables ou similaires. On peut considérer de la même manière tout document officiel ou non qui doit être archivé de façon sécurisée pendant une durée légale, qui doit être publié ou que des tiers autorisés doivent pouvoir consulter. Si le document est numérique à l'origine, il le restera tout au long de son utilisation et de son archivage. S'il est établi initialement sur un support en papier, il est au préalable numérisé avant d'être traité et archivé.

Le dépôt d'un document numérique s'effectue en plusieurs étapes. Une première étape consiste à faire apposer au moins une signature numérique sur le document par son propriétaire ou un ayant droit de ce dernier. Ensuite, au cours d'une deuxième étape, il est procédé à une transmission du document signé vers un site affecté au dépôt. Cette transmission est hautement sécurisée, par exemple au moyen de la technologie SSL ou toute autre technologie équivalente offrant les garanties requises. Ce site est déterminé selon le type de documents et constitue une banque de données gérée par un responsable appelé par la suite le tiers archiveur. Ce tiers archiveur procèdera, au cours d'une troisième étape, à une authentification du document et du propriétaire ou de son ayant droit. L'accès à ce site s'effectue moyennant la fourniture d'informations de validation telles qu'un code d'accès et un mot de passe par exemple. La vérification de la signature implique des phases au cours desquelles le dépositaire se voit demander le chemin du fichier contenant la clé d'accès privée de l'entreprise, le mot de passe associé ainsi que le chemin du certificat de clé publique. Si ces phases sont valablement accomplies, la signature est automatiquement vérifiée par le serveur du site du dépôt.

Le tiers archiveur appose ensuite, le cas échéant, une signature numérique d'authentification au cours d'une quatrième étape sur le document. Cette signature n'a pas comme objectif de valider le contenu du document, mais d'authentifier le propriétaire du document ou son ayant droit et éventuellement la nature du document afin de pouvoir l'archiver correctement.

Lorsque le dépôt du document est terminé, le document fait l'objet d'une conversion au format approprié et d'une extraction de texte. Il en résulte une version numérique à un format donné ainsi qu'un texte dit « texte extrait » qui peut servir à alimenter une base de données existante, telle que par exemple une base de données correspondant au renseignement des chiffres clés. Cette démarche peut éventuellement être rendue automatique par des outils de gestion de documents. Le document original se trouve alors dans l'état « à valider » et apparaît dans l'espace correspondant des « documents à valider» du tiers archiveur responsable des dossiers concernés. Cet espace est une partie d'un site que l'on désigne par « site tiers archiveur» à laquelle seul ce tiers archiveur peut accéder après authentification.

Chaque tiers archiveur est chargé de consulter régulièrement son espace réservé dans lequel sont stockés ses documents à valider. Il peut alors visualiser le document sur l'écran de son ordinateur, le cas échéant, valider son contenu après vérification et le signer. On notera que la visualisation et la validation n'interviennent que pour les professions réglementées. Lors de cette signature, le tiers archiveur se voit demander le mot de passe et le certificat de clé publique associés. Le document est alors validé et peut être tiers archivé.

Après l'accomplissement de ces démarches que sont d'une part l'extraction du texte et le tiers archivage du document numérique, le document peut être publié. Il devient entièrement ou partiellement, selon la nature du document, accessible en ligne au public. Il est alors à l'état publié.

Le tiers archiveur qui souhaite accéder à son espace réservé doit au préalable s'authentifier au moyen de sa clé privée. Plus précisément, le tiers archiveur doit entrer le chemin de sa clé privée, le mot de passe associé et le chemin du certificat de clé publique lors d'une phase d'authentification permettant l'accès.

En ce qui concerne la restitution du document numérique suite à une demande, ou la mise à disposition de ce document ou l'accès à une copie conforme, le tiers archiveur procède tout d'abord à une validation de la demande en vérifiant la qualité d'ayant droit à l'accès au document. Cette vérification concerne aussi bien le propriétaire du document qu'un ayant droit quelconque. Cet ayant droit peut être un tiers, qui s'acquitte d'une taxe ou d'une redevance ou d'une finance d'entrée si le document est accessible au public moyennant le paiement d'un montant déterminé. Le tiers archiveur peut procéder à la certification du document en apposant sa signature numérique pour attester que le document restitué est conforme au document tel que déposé. Après ces démarches, il restitue le document en mettant une copie de ce document à la disposition de la personne qui l'a sollicitée.

Un grand nombre de documents publiés doit être accessible à tout le monde, sous réserve éventuellement d'un paiement en ligne, conformément aux modalités attachées au site concerné et communiquées sous forme d'instructions à ceux qui le consultent. Certains documents ne sont en revanche accessibles que par des personnes habilitées. Dans ce cas, leur accès se fera via un espace de consultation sécurisé personnalisé. A cet effet, chaque tiers archiveur disposera d'un espace qui lui est propre dans lequel il trouvera notamment les documents à valider.

Parmi les avantages spécifiques à ce procédé, il convient de remarquer que les tiers archiveurs, dans l'application qui leur est consacrée peuvent supprimer les documents après la phase d'identification. Une telle suppression ne peut se faire que sur la base d'une demande expresse de l'émetteur du document ou de son ayant droit sauf en ce qui concerne les documents soumis à une réglementation spéciale, notamment lorsque la durée de conservation est prescrite par la loi. De plus, dans l'espace personnalisé, ces tiers archiveurs ont à tout moment la possibilité de consulter l'état de ces documents et de repérer l'évolution autorisée de cet état pour repérer d'éventuelles erreurs. On notera également que la mise à jour de fichiers peut être simplifiée, par exemple les fichiers relatifs à la suppression de dossiers. Pour toute personne habilitée, le suivi ou la traçabilité du dossier est rendu possible. La traçabilité est concrétisée sous la forme de documents tenant lieu d'accusés de réception.

En référence à la figure unique, le propriétaire du document ou son ayant droit dispose de moyens pour numériser le document, par exemple un scanner S pour autant que ce document ne soit pas d'origine un fichier informatique sous forme numérique. Il dispose ensuite d'un ordinateur A qui est connecté via un routeur R1 au réseau Internet appelé par la suite INT. La transmission peut s'effectuer dans tous les formats. Un routeur R2 est agencé pour récupérer le document et le transmettre à un serveur de contrôle Sc conçu pour procéder à un contrôle de l'envoi, à un contrôle du format, à un contrôle du contenu et à un contrôle de conversion du format d'origine, par exemple. Ces différents contrôles sont effectués au moment de l'entrée du document. Au moment de la sortie du document, d'autres contrôles tels que par exemple le contrôle de conversion en sortie du format stocké vers un format supporté par le demandeur peut être effectué. Cet outil garantit la pérennité de l'archivage et permet à un propriétaire de documents ou à son ayant droit de récupérer le contenu du document déposé même si le format du dépôt d'origine n'est plus disponible à la date de récupération.

Sont également couplés au réseau INT via le routeur R2 ou d'autres routeurs appropriés, les éléments suivants :
- . un ordinateur SG affecté à la signature,
- . un ordinateur EM affecté à l'empreinte,
- . un ordinateur IN affecté à l'index de recherche,
- . des ordinateurs ST1, ST2...STn affectés au stockage archivage.

Ce dessin est donné à titre d'illustration et ne peut pas être considéré comme une limitation du procédé selon l'invention.

## Revendications

1. Procédé de dépôt d'un document numérique à conserver et de restitution d'au moins une copie conforme de ce document, **caractérisé en ce que**, pour le dépôt du document sous forme numérique, le propriétaire de ce document ou un ayant droit de ce propriétaire appose au cours d'une première étape au moins une signature numérique sur le document, on procède au cours d'une deuxième étape à une transmission du document signé vers un site affecté au dépôt, on procède au cours d'une troisième étape à une authentification du document et du propriétaire ou de son ayant droit, et on procède au cours d'une quatrième étape à une signature numérique d'authentification apposée sur le document par un tiers archiveur responsable du site affecté au dépôt, et **en ce que**, pour la restitution du document numérique suite à une demande, le tiers archiveur procède à une validation de la demande en vérifiant la qualité d'ayant droit à l'accès au document, puis procède à la certification du document en apposant sa signature numérique pour attester que le document restitué est conforme au document déposé et effectue enfin la restitution d'une copie du document.

2. Procédé selon la revendication 1, **caractérisé en ce qu'**au cours de la deuxième étape, le propriétaire du document numérique ou son ayant droit accède audit site affecté au dépôt et procède à son authentification en fournissant des informations de validation comportant au moins un code d'accès et un mot de passe.

3. Procédé selon la revendication 1, **caractérisé en ce que** le site de dépôt comporte un espace réservé correspondant à des « documents à valider » du tiers archiveur responsable des dossiers concernés.

4. Procédé selon la revendication 1, **caractérisé en ce qu'**après le dépôt du document, on procède à une conversion au format approprié et à une extraction de texte pour réaliser une version numérique à un format donné.

5. Procédé selon la revendication 4, **caractérisé en ce que** l'on procède à une extraction texte pour obtenir un texte dit « texte extrait » et on le met en place dans une base de données existante.

6. Procédé selon la revendication 1, **caractérisé en ce que** le tiers archiveur, qui souhaite accéder à son espace réservé, doit entrer le chemin de sa clé privée, le mot de passe associé et le chemin du certificat de clé publique lors d'une phase d'authentification permettant l'accès.

7. Procédé selon la revendication 1, **caractérisé en ce que** pour restituer le document numérique suite à une demande, le tiers archiveur procède tout d'abord à une validation de la demande en vérifiant la qualité d'ayant droit à l'accès au document.

8. Procédé selon la revendication 1, **caractérisé en ce qu'**au moment de la restitution d'une copie conforme du document archivé, le tiers archiveur convertit ce document en un format supporté par un outil de visualisation du demandeur.
